(19) **Europäisches Patentamt / European Patent Office / Office européen des brevets**

(11) **EP 4 772 491 A1**

(12) # EUROPEAN PATENT APPLICATION
published in accordance with Art. 153(4) EPC

(43) Date of publication:
**08.07.2026 Bulletin 2026/28**

(21) Application number: **24859690.0**

(22) Date of filing: **26.08.2024**

(51) International Patent Classification (IPC):
**C04B 35/488** (2006.01)  **C01G 25/02** (2006.01)
**C04B 35/645** (2006.01)

(52) Cooperative Patent Classification (CPC):
**C01G 25/00; C01G 25/02; C04B 35/488;
C04B 35/645**

(86) International application number:
**PCT/JP2024/030217**

(87) International publication number:
**WO 2025/047657 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 JP 2023141827**

(71) Applicant: **Tosoh Corporation
Yamaguchi 746-8501 (JP)**

(72) Inventors:
• **AZECHI, Sho
Shunan-shi Yamaguchi 746-8501 (JP)**
• **ITO, Akiko
Shunan-shi Yamaguchi 746-8501 (JP)**
• **YAMAMOTO, Takahiro
Shunan-shi Yamaguchi 746-8501 (JP)**
• **ITO, Takeshi
Ayase-shi Kanagawa 252-1123 (JP)**
• **FUJISAKI, Hiroyuki
Tokyo 105-8623 (JP)**
• **NAGAYAMA, Hitoshi
Shunan-shi Yamaguchi 746-8501 (JP)**

(74) Representative: **Müller-Boré & Partner
Patentanwälte PartG mbB
Friedenheimer Brücke 21
80639 München (DE)**

(54) **ZIRCONIA SINTERED BODY CONTAINING TITANIUM AND YTTRIUM IN SOLID SOLUTION**

(57) Provided is at least one of a transparent sintered body of zirconia containing solidly dissolved titanium and yttrium and being more resistant to propagation of fracture than typical transparent sintered bodies of zirconia containing solidly dissolved titanium and yttrium, a production method therefor and use thereof. A sintered body of zirconia containing solidly dissolved titanium and yttrium has an yttrium content of 3.5 mol% or more and less than 6.0 mol% and a titanium content of 6.0 mol% or more and 18.5 mol% or less and comprises cubic crystal grains containing tetragonal domains.

FIG. 1

EP 4 772 491 A1

**Description**

TECHNICAL FIELD

The present disclosure relates to a sintered body of zirconia containing solidly dissolved titanium and yttrium.

BACKGROUND ART

Sintered bodies that are composed of zirconia containing solidly dissolved titanium and yttrium and that have a crystal phase solely composed of cubic crystals are known to have high transparency (Patent Document 1). However, such sintered bodies have low mechanical properties. Thus, studies have been conducted on improving mechanical properties of such transparent sintered bodies.

For example, Patent Document 2 discloses that a sintered body of zirconia containing solidly dissolved titanium and yttrium and having a three-point flexural strength of 255 MPa and transparency is obtained by controlling the crystal grain size of a primary sintered body to be subjected to hot isostatic pressing (hereinafter also referred to as "HIP"). In addition, Patent Document 3 discloses that a sintered body of zirconia containing solidly dissolved titanium and yttrium and having a three-point flexural strength of 300 MPa or more and transparency is obtained by controlling the extent to which titanium (Ti) is reduced in the HIP process.

PRIOR ART DOCUMENTS

PATENT DOCUMENTS

Patent Document 1: JP-A-62-091467
Patent Document 2: JP-A-2011-011970
Patent Document 3: JP-A-2011-102227

DISCLOSURE OF INVENTION

TECHNICAL PROBLEM

The sintered bodies disclosed in Patent Documents 2 and 3 achieve both a linear transmittance that presents transparency and a high three-point flexural strength. Due to these properties, defects are less likely to occur than in typical transparent sintered bodies of zirconia containing solidly dissolved titanium and yttrium. However, these sintered bodies have low resistance to propagation of fracture such as cracking, and thus fracture progresses rapidly once a defect is generated.

An object of the present disclosure is to provide at least one of a transparent sintered body of zirconia containing solidly dissolved titanium and yttrium and being more resistant to propagation of fracture than typical transparent sintered bodies of zirconia containing solidly dissolved titanium and yttrium, a production method therefor and use thereof.

SOLUTION TO PROBLEM

In the present disclosure, transparent titania-yttria-zirconia sintered bodies have been studied. As a result, it has been found that, by controlling the structure of crystal grains, degradation of transparency can be avoided even for a composition that has previously been thought to undergo degradation of transparency. Furthermore, it has also been found that a sintered body having such a composition forms a titania-yttria-zirconia sintered body that has improved resistance to fracture propagation.

That is, the present invention is as disclosed by the claims, and the gist of the present disclosure is as follows.

[1] A sintered body of zirconia containing solidly dissolved titanium and yttrium, the sintered body having an yttrium content of 3.5 mol% or more and less than 6.0 mol% and a titanium content of 6.0 mol% or more and 18.5 mol% or less and comprising cubic crystal grains containing tetragonal domains.

[2] The sintered body described in [1] above, in which the sintered body contains alumina.

[3] The sintered body described in [1] or [2] above, in which a crystallite size determined from a half-width of a peak having a peak top at $2\theta = 74.0 \pm 0.3°$ in an XRD pattern thereof is 1400 nm or less.

[4] The sintered body described in any one of [1] to [3] above, in which an average crystal grain size is 5 $\mu$m or more and

50 µm or less.

[5] The sintered body described in any one of [1] to [4] above, in which a linear transmittance at a sample thickness of 1 ± 0.1 mm and a measurement wavelength of 600 nm is 45% or more.

[6] The sintered body described in any one of [1] to [5] above, in which a fracture toughness value ($K_{IC}$) is 1.5 MPa·m$^{0.5}$ or more.

[7] The sintered body described in any one of [1] to [6] above, in which a three-point flexural strength is 280 MPa or more.

[8] A production method for the sintered body described in any one of [1] to [7] above, the method comprising: a primary sintering step of subjecting a green body containing a zirconia source, an yttrium source and a titanium source at an yttrium content of 3.5 mol% or more and less than 6.0 mol% and a titanium content of 6.0 mol% or more and 18.5 mol% or less to pressureless sintering in an oxidizing atmosphere at 1260°C or higher to obtain a primary sintered body; a pressure sintering step of pressure-sintering the primary sintered body in a reducing atmosphere at 1500°C or higher to obtain a pressure-processed body and a heat treatment step of heat-treating the pressure-processed body in an oxidizing atmosphere.

[9] The production method described in [8] above, in which the green body is obtained by a forming step of forming a raw material powder obtained by a mixing method involving mixing a mixed raw material powder containing a zirconia source and an yttrium source with a titanium source.

[10] The production method described in [8] or [9] above, in which the primary sintered body has a measured density of 5.35 g/cm$^3$ or more and 6.00 g/cm$^3$ or less.

[11] The production method described in any one of [8] to [10] above, in which pressure sintering involves a hot isostatic pressing process.

[12] The production method described in any one of [8] to [11] above, in which the reducing atmosphere is a weakly reducing atmosphere.

[13] The production method described in any one of [8] to [12] above, in which a cooling rate from a retention temperature to 1000°C in pressure sintering is 50°C/minute or more and 300°C/minute or less.

[14] A member comprising the sintered body described in any one of [1] to [7] above.

ADVANTAGEOUS EFFECTS OF INVENTION

According to the present disclosure, at least one of a transparent sintered body of zirconia containing solidly dissolved titanium and yttrium and being more resistant to propagation of fracture than typical transparent sintered bodies of zirconia containing solidly dissolved titanium and yttrium, a production method therefor and use thereof can be provided.

BRIEF DESCRIPTION OF DRAWINGS

[Fig. 1] An electron beam diffraction map of a sintered body of Example 1.
[Fig. 2] An electron beam diffraction map of a sintered body of Comparative example 5.
[Fig. 3] Rietveld analysis results obtained from the sintered body of Example 1.

DESCRIPTION OF EMBODIMENTS

A sintered body of the present disclosure will now be described through some exemplary embodiments. Each of the features and parameters disclosed in this description may be combined in any way, and upper limits and lower limits of values disclosed in this description may be combined in any way.

A "compositional substance" is a substance having a particular composition, and is, for example, at least one selected from the group consisting of a powder, a granule, a green body, a calcined body and a sintered body.

A "powder" is a set of powder particles and is a compositional substance having flowability. A "zirconia powder" is a powder containing zirconia as a main component or a powder essentially composed of zirconia.

A "granular powder" is a powder constituted by granular particles, and "granular particles" are particles (tertiary particles) resulting from slow aggregation of powder particles (in particular, at least one of primary particles and secondary particles) by a physical force and may contain an organic component.

A "green body" is a compositional substance that has a particular shape constituted by powder particles aggregated by a physical force, in particular, a compositional substance in a state where heat treatment is not yet performed after the shape is given (for example, after forming). A "zirconia green body" is a green body containing zirconia as a main component, in particular, a green body essentially composed of zirconia. Note that "green body" and "compact" are interchangeable terms in this embodiment.

A "sintered body" is a compositional substance that has a particular shape constituted by crystal grains and is a compositional substance heat-treated at a temperature higher than or equal to the sintering temperature. A "zirconia sintered body" is a sintered body containing zirconia as a main component, in particular, a sintered body essentially composed of zirconia.

A "stabilizing element" is an element that has a function of stabilizing the zirconia crystal phase by solidly dissolving into zirconia.

A "powder X-ray diffraction pattern" is an XRD pattern of a compositional substance obtained by powder X-ray diffraction (hereinafter may also be referred to as "XRD") measurement under the following conditions.

Radiation source: CuKα radiation (λ = 0.15418 nm)
Measurement mode: continuous scan
Scan speed: 1°/minute
Measurement range: 2θ = 20° to 80°
Accelerating voltage · current: 40 kV · 40 mA
Divergence height slit: 10 mm
Divergence/incident slit: 1°
Receiving slit: open
Detector: semiconductor detector (D/teX Ultra)
Filter: Ni filter
Goniometer radius: 185 mm

XRD measurement can be carried out by using a common X-ray diffractometer (for example, Ultima IV produced by RIGAKU Corporation). When the compositional substance is a sintered body, the surface thereof may be polished to surface roughness Ra ≤ 0.02 μm and XRD measurement may be performed on the polished surface.

XRD peaks corresponding to the respective crystal planes of zirconia measured by the aforementioned XRD measurement are, for example, those XRD peaks that have peak tops at 2θ below:

XRD peak corresponding to monoclinic (111) plane: 2θ = 31 ± 0.5°
XRD peak corresponding to monoclinic (11-1) plane: 2θ = 28 ± 0.5°
XRD peak corresponding to tetragonal (111) plane: 2θ = 30 ± 0.5°
XRD peak corresponding to cubic (111) plane: 2θ = 30 ± 0.5°
XRD peak corresponding to tetragonal (400) plane: 2θ = 72.8 ± 0.3°
XRD peak corresponding to tetragonal (004) plane: 2θ = 74.8 ± 0.3°
XRD peak corresponding to cubic (400) plane: 2θ = 74.0 ± 0.3°

Here, the XRD peak corresponding to the tetragonal (111) plane and the XRD peak corresponding to the cubic (111) plane are measured as one overlapping peak.

XRD peak detection may involve performing profile fitting with a split pseudo-Voigt function on an XRD pattern that has been subjected to a smoothing process and a background subtraction process (hereinafter this pattern may also be referred to as a "processed XRD pattern"). The smoothing process, the background process and the XRD pattern analysis such as XRD peak detection may be performed under the following conditions by using a program such as an analytic program bundled with the X-ray diffractometer (for example, Integrated Analytical Software for Powder X-ray Diffraction, PDXL Ver. 2.2 produced by RIGAKU Corporation). Furthermore, in the present embodiment, those peaks that are detected by the aforementioned process are defined as XRD peaks. Meanwhile, an XRD pattern or a processed XRD pattern may include minute peaks (also known as noise) undetectable in the aforementioned fitting.

Scherrer constant: 1.000
Smoothing method: smoothing by β-spline, γ threshold = 1.50
Background subtraction method: straight line connecting end points
Kα2 radiation removal method: intensity ratio = 0.497
Peak search method: peak top method, α cut value = 3.00
Profile fitting method: split pseudo-Voigt function

[Sintered body]

The present embodiment is a sintered body of zirconia containing titanium and yttrium, the sintered body having an yttrium content of 3.5 mol% or more and less than 6.0 mol% and a titanium content of 6.0 mol% or more and 18.5 mol% or less and comprising cubic crystal grains containing tetragonal domains. Due to these features, the sintered body exhibits transparency comparable to that of typical zirconia sintered bodies composed of cubic crystal grains and higher mechanical strength than these typical zirconia sintered bodies.

The sintered body of this embodiment is a sintered body of zirconia and is a sintered body containing zirconia as a main component (matrix), also known as a zirconia sintered body. The sintered body of the present embodiment is, in particular, a sintered body of zirconia containing solidly dissolved titanium and yttrium, also known as a titania-yttria-zirconia sintered body, among various zirconia sintered bodies. In addition, the sintered body of the present embodiment is a transparent sintered body, in particular, a sintered body of zirconia having transparency, also known as a transparent zirconia sintered body.

The feature that titanium and yttrium are solidly dissolved in zirconia and the feature that the sintered body of the present embodiment is free of titanium or yttrium not solidly dissolved in zirconia (undissolved titanium and yttrium) may be identified by the absence of XRD peaks corresponding to the titanium compounds and yttrium compounds in the XRD pattern. It should be noted that presence of undissolved titanium and yttrium within the range that does not obstruct the effects of the sintered body of the present embodiment, such as presence of undissolved titanium and yttrium to a degree undetectable in the XRD patterns, is acceptable. For the sake of convenience, such a case is deemed as free of undissolved titanium and yttrium in this embodiment.

Yttrium (Y) functions as a stabilizing element that stabilizes the zirconia crystal phase by solidly dissolving into zirconia. Meanwhile, titanium (Ti), although solidly dissolves in zirconia, is considered to lack the function of stabilizing the zirconia crystal phase so far as the sintered body of the present embodiment is concerned.

The sintered body of the present embodiment has an yttrium content of 3.5 mol% or more and less than 6.0 mol%. When the yttrium content is less than 3.5 mol%, transparency is low, and the sintered body exhibits prominently low transparency despite having light transmitting properties. When the yttrium content is 6.0 mol% or more, the resistance to propagation of fracture is low, and the sintered body breaks easily. As a result, it becomes difficult to apply the sintered body to the usage of transparent ceramics such as decorative members. In order for the sintered body to have a fracture toughness value and transparency applicable to the decorative members or the like, the yttrium content is, for example, 4.0 mol% or more, 4.2 mol% or more, 4.35 mol% or 4.5 mol% or more, and 5.8 mol% or less, 5.5 mol% or less, less than 5.5 mol%, 5.2 mol% or less, 5.0 mol% or less or 4.7 mol% or less and is preferably 4.0 mol% or more and 5.8 mol% or less, 4.0 mol% or more and less than 5.5 mol%, 4.2 mol% or more and 5.5 mol% or less, 4.2 mol% or more and less than 5.5 mol%, 4.2 mol% or more and 5.2 mol% or less, 4.35 mol% or more and 5.2 mol% or less or 4.5 mol% or more and 5.0 mol% or less.

The yttrium content in the present embodiment is a ratio [mol%] of the amount of substance of yttrium as $Y_2O_3$ to the total of the amount of substance [mol] of zirconia ($ZrO_2$) and the amount of substance [mol] of solute elements as oxides.

Note that the solute elements in the present embodiment are elements that substitute zirconium (Zr) cations of zirconia and are contained as cations in zirconia. Specific examples of the solute elements include at least one selected from the group consisting of titanium (Ti), yttrium (Y), erbium (Er), terbium (Tb), calcium (Ca), magnesium (Mg), lanthanum (La), cerium (Ce), gadolinium (Gd), praseodymium (Pr), Nd (neodymium), samarium (Sm), europium (Eu), dysprosium (Dy), holmium (Ho), erbium (Er), thulium (Tm), ytterbium (Yb) and lutetium (Lu). The solute elements contained in the sintered body of the present embodiment are preferably yttrium and titanium only, and lanthanum is preferably not contained.

The sintered body of the present embodiment is preferably free of undissolved solute elements, but may contain undissolved solute elements as long as the effects of the sintered body of the present embodiment are not impaired. In the present embodiment, the absence of the undissolved solute elements may be confirmed through the absence of the XRD peaks corresponding to the compounds of the solute elements in the XRD pattern.

The sintered body of this embodiment has a titanium content of 6.0 mol% or more and 18.5 mol% or less. When the titanium content is less than 6.0 mol%, crystal grains containing a tetragonal phase are easily generated, and a sintered body constituted by crystal grains composed of a cubic phase is rarely obtained. When the titanium content exceeds 18.5 mol%, defects are generated during production (during sintering) of the sintered body, and a sintered body is not obtained. The titanium content is, for example, 7.0 mol% or more, 8.0 mol% or more, 9.0 mol% or more, 9.3 mol% or more 10.0 mol% or more or 12.0 mol% or more, and 17.0 mol%% or less, 15.0 mol% or less or 13.0 mol% or less and is preferably 7.0 mol% or more and 17.0 mol%% or less, 8.0 mol% or more and 15.0 mol% or less, 9.0 mol% or more and 13.0 mol% or less, 9.3 mol% or more and 13.0 mol% or less or 10.0 mol% or more and 13.0 mol% or less.

The titanium content in the present embodiment is a ratio [mol%] of the amount of substance of titanium as $TiO_2$ to the total of the amount of substance [mol] of zirconia ($ZrO_2$) and the amount of substance [mol] of solute elements as oxides.

The sintered body of the present embodiment is to have the aforementioned titanium and yttrium contents; for example, the total content of titanium and yttrium is 9.5 mol% or more, 10.0 mol% or more, 13.0 mol% or more or 15.0 mol% or more and less than 24.5 mol%, 20.0 mol% or less, 18.0 mol% or less or 17.0 mol% or less, or 9.5 mol% or more and less than 24.5 mol%, 10.0 mol% or more and 20.0 mol% or less, 13.0 mol% or more and 20.0 mol% or less or 15.0 mol% or more and 17.0 mol% or less. The total content of the solute elements in the present embodiment may be the amount similar to this.

The sintered body of the present embodiment may be a sintered body composed of zirconia containing solidly dissolved titanium and yttrium; alternatively, alumina ($Al_2O_3$) may be contained in addition to zirconia containing solidly dissolved titanium and yttrium. The presence of alumina tends to increase the strength.

The sintered body of the present embodiment may be free of alumina (the alumina content: 0 mass%) but may contain alumina, and the sintered body of the present embodiment may have an alumina content of 0 mass% or more. The alumina content is, for example, 0.15 mass% or less, 0.08 mass% or less or less than 0.05 mass%. When alumina is contained, the alumina content is, for example, more than 0 mass%, 0.01 mass% or more or 0.04 mass% or more. The alumina content of the sintered body of the present embodiment is, for example, 0 mass% or more and 0.15 mass% or less or 0 mass% or more and less than 0.05 mass%, and is preferably more than 0 mass% and 0.15 mass% or less, 0.01 mass% or more and 0.08 mass% or less or 0.04 mass% or more and 0.08 mass% or less.

The alumina content in the present embodiment may be determined from the ratio [mass%] of the $Al_2O_3$-based mass of aluminum relative to the oxide-based total mass (hereinafter may also be referred to as the "metal mass") of the metal elements in the sintered body.

The sintered body of the present embodiment is a sintered body of zirconia containing solidly dissolved titanium and yttrium. Since the matrix of the sintered body is zirconia, the composition thereof includes titanium, yttrium and, if necessary, alumina in addition to zirconia. In other words, according to the composition of the sintered body of the present embodiment, the remainder other than yttrium, titanium and aluminum is zirconia.

The sintered body of the present embodiment is preferably free of impurities, but may contain impurities as long as the effects thereof are exhibited. Specific examples of the impurities include metal elements, in particular, alkali metal elements. Furthermore, the sintered body of the present embodiment may contain hafnia ($HfO_2$), which is an inevitable impurity of zirconia. In calculating the composition-related values such as density in this embodiment, hafnia may be considered zirconia.

The composition of the sintered body of the present embodiment may be determined as follows when, for example, the sintered body is an alumina-containing sintered body of zirconia containing solidly dissolved titanium and yttrium.

$$\text{Metal mass [g]}$$
$$= Al_2O_3 + TiO_2 + Y_2O_3 + ZrO_2$$

$$\text{Yttrium content [mol\%]}$$
$$= \{Y_2O_3/(ZrO_2 + Y_2O_3 + TiO_2)\} \times 100$$

$$\text{Titanium content [mol\%]}$$
$$= \{TiO_2/(ZrO_2 + Y_2O_3 + TiO_2)\} \times 100$$

$$\text{Solute element content [mol\%]}$$
$$= \{(Y_2O_3 + TiO_2)/(ZrO_2 + Y_2O_3 + TiO_2)\} \times 100$$

$$\text{Aluminum content [mass\%]}$$
$$= \{Al_2O_3/(Al_2O_3 + TiO_2 + Y_2O_3 + ZrO_2)\} \times 100$$

The sintered body of the present embodiment is composed of cubic crystal grains, in particular, cubic crystal grains of zirconia in which yttrium and titanium are solidly dissolved. The cubic phase is a crystal phase having a shape having no anisotropy. Since the sintered body of the present embodiment is constituted by cubic crystal grains, light scattering derived from anisotropy of the crystal structure does not occur, and the sintered body exhibits high transparency. Here, the sintered body of the present embodiment may contain, in addition to the cubic crystal grains (cubic crystal grains of zirconia in which yttrium and titanium are solidly dissolved), alumina crystal grains.

In the present embodiment, for the sake of convenience, the crystal phase of zirconia may considered to be composed of three crystal phases: cubic phase, tetragonal phase and monoclinic phase. In addition, the sintered body is considered to be composed of cubic crystal grains when XRD peaks of the tetragonal and monoclinic phases are not detected in the XRD pattern of the sintered body. The sintered body of the present embodiment can be considered to be composed of cubic zirconia; furthermore, zirconia contained in the sintered body of the present embodiment may be considered to be composed of a cubic phase. The feature that the sintered body of the present embodiment is composed of cubic crystal grains may be specifically confirmed by the presence of a peak having a peak top at $2\theta = 74.0 \pm 0.3°$ and the absence of a peak having a peak top at $2\theta = 72.8 \pm 0.3°$ or a peak having a peak top at $2\theta = 74.8 \pm 0.3°$ in the XRD pattern.

Furthermore, in Rietveld analysis referencing an XRD pattern of a crystal structure model of zirconia solely composed of the cubic phase (cubic model) and an XRD pattern of a crystal structure model of zirconia composed of a cubic-tetragonal mixed phase (mixed model), the cubic model preferably fits the XRD pattern of the sintered body of the present embodiment. In this manner, the absence of tetragonal crystal grains and monoclinic crystal grains in the sintered body of the present embodiment can be confirmed.

The Rietveld analysis may be performed with an analytic program (for example, Rietan-FP), and structure models that use the cubic Fm-3m space group as the cubic phase and the tetragonal P42nmc space group as the tetragonal phase may be used as the cubic model and the mixed model.

As described above, at an yttrium content of the sintered body of the present embodiment, usually, zirconia has a mixed phase composed of tetragonal crystal grains and cubic crystal grains. In contrast, the sintered body of the present embodiment is solely composed of the cubic crystal phase despite having the aforementioned yttrium content.

The sintered body of the present embodiment preferably has appropriately high cubic-phase crystallinity, and the crystallite size determined from the half-width (hereinafter may also be referred to as the "FWHM") of the peak having a peak top at $2\theta = 74.0 \pm 0.3°$ in the XRD pattern (hereinafter this size may simply referred to as the "crystallite size") is preferably 1400 nm or less, 1050 nm or less, 800 nm or less or 650 nm or less. The crystallite size is, for example, 150 nm or more, 300 nm or more, 400 nm or more or 500 nm or more and is preferably 300 nm or more and 1400 nm or less, 400 nm or more and 800 nm or less or 400 nm or more and 650 nm or less.

The crystallite size in the present embodiment may be determined from the following equation.

$$D = \kappa\lambda/\beta\cos\theta$$

In the equation above, D is the crystallite size (nm), $\kappa$ is a Scherrer constant ($\kappa = 1.000$), $\lambda$ is the wavelength of measurement X-ray (when the CuK$\alpha$ radiation is the radiation source, $\lambda = 0.1548$ nm), $\beta$ is the half-width (°) of the peak having a peak top at $2\theta = 74.0 \pm 0.3°$ and $\theta$ is a Bragg angle.

The half-width of the peak having a peak top at $2\theta = 74.0 \pm 0.3°$ may be determined by fitting of the processed XRD pattern obtained by the aforementioned method.

The crystal grains constituting the sintered body of the present embodiment are cubic crystal grains containing tetragonal domains. By containing tetragonal domains, the resistance to propagation of fracture is enhanced, and even when defects such as cracks are generated in the sintered body of the present embodiment, expansion of the generated defects is suppressed. As a result, compared with typical sintered bodies composed of cubic crystal grains, the fracture toughness value is high and the sintered body is more resistant to breaking.

The sintered body of the present embodiment is mainly constituted by zirconia crystal grains (more specifically, crystal grains of zirconia in which yttrium and titanium are solidly dissolved). A crystal grain is a structure (grain) constituted by multiple crystallites. In the present embodiment, a domain (crystal domain) is a region constituted by crystallites having the same crystal structure in the crystal grain. Furthermore, a tetragonal domain is a region solely constituted by crystallites having a tetragonal phase in the cubic crystal grain. Usually, cubic crystal grains are solely constituted by crystallites having a cubic phase (solely constituted by cubic domains). In contrast, the crystal grains constituting the sintered body of the present embodiment are cubic crystal grains containing tetragonal domains. Thus, the crystal grains in the sintered body of the present embodiment are crystal grains that include tetragonal domains in addition to cubic domains, and can be considered crystal grains composed of cubic domains and tetragonal domains.

The feature that the sintered body of the present embodiment is constituted by cubic crystal grains containing tetragonal domains can be confirmed by the following method. That is, detection of the aforementioned XRD peaks can confirm the feature that the sintered body is constituted by cubic crystal grains. In addition, the feature that the crystal grains contain tetragonal domains can be confirmed by the fact that electron beam diffraction points (hereinafter may be referred to as "spots") corresponding to the tetragonal crystal plane is observed in an electron beam diffraction map obtained from crystal grains observed by nanodiffraction mapping by a transmission electron microscope (hereinafter may also be referred to as the "TEM") measured under the conditions described below.

Analytic orientation: tetragonal [100]
Accelerating voltage: 200 Kv

Magnification of observation: 250000x

The TEM nanodiffraction mapping and the electron beam diffraction map may be obtained by using a common TEM (for example, JEM-F200 produced by JEOL Ltd.) and a common electron beam diffractometer (for example, 4D-STEM produced by Gatan, Inc.).

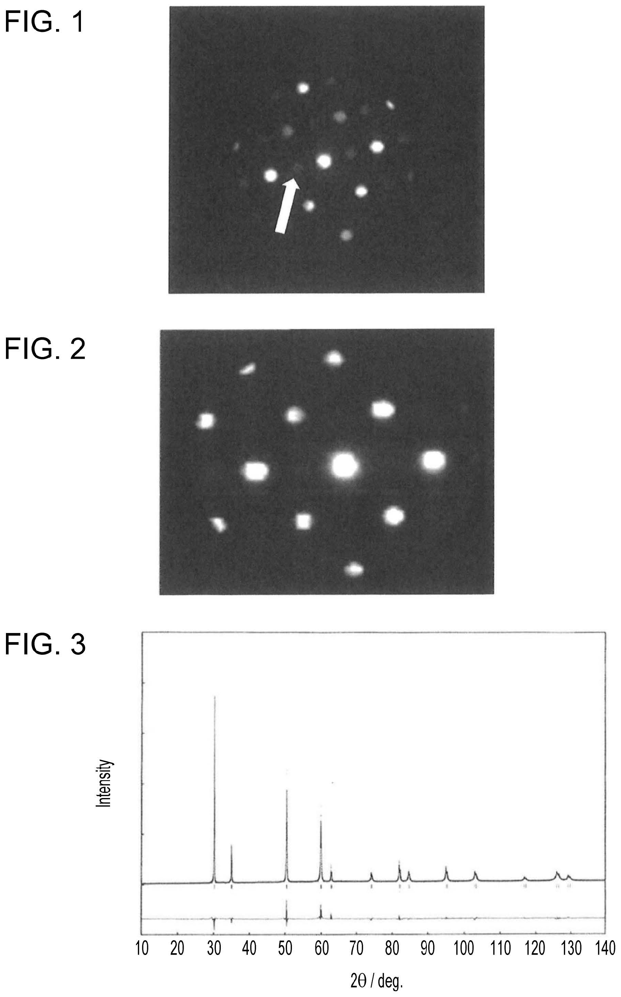

Figs. 1 and 2 are, respectively, a diffraction pattern of a cubic crystal grain having a tetragonal domain and a diffraction pattern of a cubic crystal grain having no tetragonal domain. Fig. 1 confirms the presence of a spot corresponding to a tetragonal phase (the portion pointed by the arrow in Fig. 1 is the spot corresponding to the tetragonal (100) plane and planes equivalent thereto). Meanwhile, Fig. 2 has no spot corresponding to the tetragonal phase. The presence of a spot corresponding to the tetragonal phase in a diffraction pattern as shown in Fig. 1 can confirm that the crystal grain contains a tetragonal domain.

The average crystal grain size of the sintered body of the present embodiment is, for example, 5 $\mu$m or more, 10 $\mu$m or more or 15 $\mu$m or more and 50 $\mu$m or less, 40 $\mu$m or less, 30 $\mu$m or less or 20 $\mu$m or less. Since the mechanical strength has a tendency to increase with the decrease in the average crystal grain size, the average crystal grain size of the sintered body of the present embodiment is preferably 5 $\mu$m or more and 50 $\mu$m or less, 10 $\mu$m or more and 40 $\mu$m or less, 10 $\mu$m or more and 30 $\mu$m or less or 15 $\mu$m or more and 30 $\mu$m or less.

The average crystal grain size is the average size of the crystal grains constituting the sintered body, and is a value obtained by a planimetric method from an SEM observation image obtained by observing a surface of the sintered body with a scanning electron microscope (hereinafter also referred to as "SEM"). Specifically, to suppress variation in the observed crystal grains derived from observing different sites with the SEM, two or more, in particular, two or more and four or less, SEM observation images are used, and two circles are drawn on each of the SEM observation images in such a way that, for each circle, the total of the number of crystal grains inside the circle ($n_c$) and the number of crystal grains touching the circumference ($N_i$) is 100 $\pm$ 30 grains. For all of the circles drawn, the crystal grain size of each circle was determined by a planimetric method, and the average value thereof may be assumed to be the average crystal grain size.

The SEM observation in measuring the average crystal grain size may be carried out with a common scanning electron microscope (for example, JSM-IT500LA produced by JEOL Ltd.). The observation magnification for the SEM observation may be appropriately set such that the number of crystal grains to be image-analyzed (the crystal grains observed in the SEM observation image without disruption in the crystal grain boundaries) is 450 $\pm$ 50. The conditions for the SEM observation may be as follows.

Accelerating voltage: 15 kV
Irradiation current: 40 nA
Magnification of observation: 400x to 10000x

Prior to the measurement, a sintered body sample may be surface-ground with a #200 grinding stone, then lap-polished with diamond abrasives having grain sizes of 3 $\mu$m and 1 $\mu$m and then thermally etched in an air atmosphere at a temperature at which crystal grain boundaries can be confirmed, and the resulting sample may be used in the measurement.

The shape of the sintered body of the present embodiment is, for example, at least one selected from the group consisting of a spherical shape, an approximately spherical shape, an elliptical shape, a disk shape, a cylindrical shape, a cubic shape, a rectangular parallelepiped shape, a polyhedral shape and an approximately polyhedral shape. Furthermore, the shape may be any shape that suits the purpose such as various usage.

The sintered body of the present embodiment has transparency; for example, the linear transmittance (hereinafter may also be referred to as "It") at a sample thickness of 1 $\pm$ 0.1 mm and a measurement wavelength of 600 nm is 45% or more or is 50% or more. It is a parameter of transparency, and the higher the It, the higher the transparency. Thus, the sintered body of the present embodiment preferably has an It of 52% or more or 55% or more. The It is preferably as high as possible; however, the It of the sintered body of the present embodiment is, for example, 75% or less, 70% or less, 65% or less or 60% or less or is, for example, 45% or more and 75% or less, 50% or more and 75% or less, 52% or more and 70% or less, 52% or more and 65% or less or 55% or more and 60% or less.

The transparency of the sintered body of the present embodiment is preferably high; for example, the total transmittance (hereinafter may also be referred to as "Tt") at a sample thickness of 1 $\pm$ 0.1 mm and a measurement wavelength of 600 nm is preferably 60% or more. Tt is a parameter of light transmitting properties, and the higher the Tt, the higher the light transmitting properties. While the sintered body of the present embodiment is to satisfy the It described above, Tt is, for example, 65% or more, 70% or more or 71% or more and 80% or less, 77% or less, 75% or less or 73% or less. The Tt of the sintered body of the present embodiment is, for example, 60% or more and 80% or less, 65% or more and 80% or less, 70% or more and 75% or less or 71% or more and 75% or less.

To smoothly obtain a transparent member with higher aesthetic merit, the ratio of It to Tt (hereinafter may also be referred to as the "It/Tt ratio") is preferably as high as possible; for example, the It/Tt ratio of the sintered body of the present embodiment is 0.95 or less, 0.90 or less or 0.85 or less. For achieving high transparency with high aesthetic merit, It/Tt is, for example, 0.70 or more or 0.75 or less or is, for example, 0.70 or more and 0.95 or less, 0.70 or more and 0.90 or less or 0.75 or more and 0.85 or less.

In the present embodiment, the Tt and It are each a light transmittance obtained by measurement in accordance with JIS K 7361-1. The proportion of the transmitted light (total of linear transmitted light and diffuse transmitted light) relative to the incident light is the total transmittance [%] and the proportion of the linear transmitted light relative to the incident light is the linear transmittance [%], where the relationship total transmittance [%] = linear transmittance [%] + diffuse transmittance [%] is established. The measurement sample used is a disk-shaped sintered body having a sample thickness of $1.0 \pm 0.1$ mm and a surface roughness Ra $\leq 0.02$ μm on both surfaces, and a common spectrophotometer (for example, spectrophotometer V-650 produced by JASCO Corporation) may be used as the measurement instrument.

The sintered body of the present embodiment not only has high transparency but also high resistance to propagation of fracture. The sintered body of the present embodiment preferably has a fracture toughness value ($K_{IC}$), which is one of parameters of resistance to propagation of fracture, of 1.5 MPa·m$^{0.5}$ or more, 2.0 MPa·m$^{0.5}$ or more or 2.2 MPa·m$^{0.5}$ or more. The fracture toughness value is preferably high, and, for example, the fracture toughness value of the sintered body of the present embodiment is 3.0 MPa·m$^{0.5}$ or less, 2.8 MPa·m$^{0.5}$ or less or 2.6 MPa·m$^{0.5}$ or less and is preferably 1.5 MPa·m$^{0.5}$ or more and 3.0 MPa·m$^{0.5}$ or less, 2.0 MPa·m$^{0.5}$ or more and 3.0 MPa·m$^{0.5}$ or less or 2.2 MPa·m$^{0.5}$ or more and 2.8 MPa·m$^{0.5}$ or less.

The "fracture toughness value ($K_{IC}$)" in the present embodiment is the value [MPa·m$^{0.5}$] of fracture toughness measured by a method that conforms with the SEPB method prescribed in JIS R 1607. The measurement of the fracture toughness value may be performed on a cylindrical sintered body sample having a width of 4 mm and a thickness of 3 mm at a support span of 30 mm, and the average value of 10 measurement runs may be assumed to be the fracture toughness value of the sintered body of the present embodiment. In addition, a common strength tester (for example, INSTRON tester model 5582 produced by INSTRON) may be used in the measurement. Note that JIS R 1607 prescribes two types of fracture toughness measurement: IF method and SEPB method. The IF method tends to give higher values than the SEPB method. Moreover, the IF method is a simplified measurement method and thus the measured values vary significantly for each run. Thus, absolute values of the fracture toughness values of the present embodiment and those of the fracture toughness values measured by the IF method cannot be compared. By the same token, absolute values of the fracture toughness values measured by a method other than the SEPB method and those of the fracture toughness values measured by the SEPB method cannot be compared.

To make the sintered body of the present embodiment resistant to breaking during processing, the strength is preferably high, and the three-point flexural strength of the sintered body of the present embodiment is preferably 280 MPa or more, 310 MPa or more, 350 MPa or more or 420 MPa or more. The sintered body of this embodiment is to have a strength suitable for processing, and, for example, the three-point flexural strength is 800 MPa or less, 750 MPa or less, 700 MPa or less or 600 MPa or less or is 280 MPa or more and 800 MPa or less, 310 MPa or more and 700 MPa or less or 420 MPa or more and 600 MPa or less.

The "three-point flexural strength" in the present embodiment is a value measured by a method that conforms with JIS R 1601. The measurement sample used may have a columnar shape 4 mm in width, 3 mm in thickness and 45 mm in length, and measurement may be carried out by applying a load in a horizontal direction of the measurement sample with a support span of 30 mm. For measurement, a common strength tester (for example, a tabletop universal precision tester AGX-10kNX produced by Shimadzu Corporation) may be used.

The sintered body of the present embodiment may be a sintered body (hereinafter may also be referred to as a "complex sintered body") that includes the sintered body of the present embodiment and a sintered body other than the sintered body of the present embodiment. The complex sintered body is a sintered body in a state where the sintered body of the present embodiment and a sintered body other than the sintered body of the present embodiment have become monolithic due to sintering, thereby yielding a member with higher aesthetic merit. Here, the "state where ... have become monolithic due to sintering" does not refer to the state where the sintered bodies have come together through physical structures, such as use of adhesives or by fitting, or through other physical actions, but refers to the feature that the sintered body of the present embodiment and the sintered body other than the sintered body of the present embodiment have formed an interface and become monolithic.

The sintered body other than the sintered body of the present embodiment contained in the complex sintered body may be any sintered body having aesthetic merit different from that of the sintered body of the present embodiment but is preferably a zirconia sintered body and more preferably an opaque zirconia sintered body. The opaque zirconia sintered body is, for example, a sintered body of zirconia having It of 0% or more and 5% or less, 0% or more and 3% or less, 0% or more and 1% or less or, particularly, 0% or more and 0.5% or less. The sintered body other than the sintered body of the present embodiment included in the complex sintered body is, for example, a sintered body of chromatic or achromatic zirconia and examples of the achromatic zirconia include white, gray and black zirconia sintered bodies. Meanwhile, examples of the chromatic zirconia sintered body include red, orange, yellow, green, blue, indigo and purple zirconia sintered bodies and black zirconia sintered bodies.

The sintered body of the present embodiment can be applied to transparent ceramics and can be used in, for example, at least one selected from the group consisting of optical members, exterior members and decorative members. Furthermore, the sintered body of the present embodiment may be used as a member containing the sintered body.

[Method for producing sintered body]

The method for producing the sintered body of the present embodiment may be any production method as long as a sintered body that satisfies the aforementioned features is obtained. A preferable example of the production method comprises a primary sintering step of subjecting a green body containing a zirconia source, an yttrium source and a titanium source at an yttrium content of 3.5 mol% or more and less than 6.0 mol% and a titanium content of 6.0 mol% or more and 18.5 mol% or less to pressureless sintering in an oxidizing atmosphere at 1260°C or higher to obtain a primary sintered body; a pressure sintering step of pressure-sintering the primary sintered body in a reducing atmosphere at 1500°C or higher to obtain a pressure-processed body and a heat treatment step of heat-treating the pressure-processed body in an oxidizing atmosphere (hereinafter this method may also be referred to as the "production method of the present embodiment"). By the production method of the present embodiment, a sintered body of zirconia solely composed of a cubic phase can be obtained despite having a composition that has been believed to yield only a zirconia sintered body having a tetragonal-cubic mixed phase as the crystal phase.

The production method of the present embodiment includes a primary sintering step of subjecting a green body containing a zirconia source, an yttrium source and a titanium source at an yttrium content of 3.5 mol% or more and less than 6.0 mol% and a titanium content of 6.0 mol% or more and 18.5 mol% or less to pressureless sintering to obtain a primary sintered body As a result, a primary sintered body to be subjected to a pressure sintering process is obtained.

A green body containing a zirconia source, an yttrium source and a titanium source at an yttrium content of 3.5 mol% or more and less than 6.0 mol% and a titanium content of 6.0 mol% or more and 18.5 mol% or less is subjected to the primary sintering step.

The zirconia source may be zirconia ($ZrO_2$).

The yttrium source may be any yttrium compound, and is, for example, at least one selected from the group consisting of oxides, hydroxides, oxyhydroxides and halides containing yttrium, is preferably one or both of a chloride and an oxide of yttrium, is more preferably one or both of yttrium oxide (yttria; $Y_2O_3$) and yttrium chloride ($YCl_3$) and is more preferably yttrium oxide.

The green body may contain, in addition to or instead of zirconia and yttrium compounds, zirconia containing solidly dissolved yttrium (yttrium-stabilized zirconia). Furthermore, the green body preferably contains, instead of zirconia and yttrium compounds, zirconia containing solidly dissolved yttrium (in other words, the zirconia source and the yttria source are preferably zirconia containing solidly dissolved yttrium). Zirconia containing solidly dissolved yttrium is zirconia stabilized by solidly dissolving yttrium, that is, yttrium-stabilized zirconia.

The titanium source may be any titanium compound, and is, for example, at least one selected from the group consisting of oxides, hydroxides, oxyhydroxides and halides containing titanium, is preferably one or both of a chloride and an oxide of titanium, is more preferably one or both of titanium oxide (titania; $TiO_2$) and titanium chloride ($TiCl_4$) and is more preferably titanium oxide.

The green body may contain an alumina source. The alumina source may be one or both of alumina and a precursor thereof and is preferably alumina ($Al_2O_3$).

The green body may contain a binder. By containing a binder, the operation ease (handling) and shape retaining properties are further enhanced. The binder may be any binder that can be used in granulation and forming of ceramics, and is preferably an organic binder. The organic binder is, for example, at least one selected from the group consisting of polyvinyl alcohol, polyvinyl butyrate, wax and acrylic resin, and is preferably either or both of polyvinyl alcohol and acrylic resin and more preferably acrylic resin. In this embodiment, the acrylic resin is a polymer that contains either or both of an acrylic acid ester and a methacrylic acid ester. A specific example of the binder is at least one selected from the group consisting of AS-1100, AS-1800 and AS-2000 (all trade names, produced by Toa Gosei Co., Ltd.).

The composition of the green body is that the yttrium content is 3.5 mol% or more and less than 6.0 mol% and the titanium content is 6.0 mol% or more and 18.5 mol% or less, and the metal elements may be contained in a composition similar to that of the intended sintered body, and may be contained in a composition similar to that of the sintered body described above.

When the binder is contained, the content of the binder is 0.5 mass% or more or 1 mass% or more or is 10 mass% or less or 5 mass% or less, for example. The content of the binder may be determined as follows.

$$\{(W_2 - W_1)/W_2\} \times 100$$

In the formula above, $W_1$ is the mass [g] of the green body after the heat treatment in an air atmosphere at 250°C or higher and 400°C or lower, and $W_2$ is the mass [g] of the green body before the heat treatment. Since the calculation method is different, the apparent composition of the green body including the binder does not have to add up to 100 mass%.

The green body may be produced by any method as long as a green body in which a zirconia source, an yttrium source, a titanium source and, if necessary, an alumina source are homogeneously distributed. An example of the method for producing the green body is a method for forming a green body, the method including a forming step of forming a powder containing a zirconia source, an yttrium source and a titanium source.

In the forming step, powders similar to the aforementioned zirconia source, yttrium source and titanium source (hereinafter each may also be referred to as a "starting material" or may be collectively referred to as a "raw material powder") may be used. The raw material powder may contain an alumina source. Furthermore, the production method of the present embodiment includes a pressure sintering step. In pressure sintering, the sinterability of the starting materials do not have much influence and thus the starting materials may be commercially available powders (for example, reagent-grade powders) or granular powders.

The starting materials (zirconia source, yttrium source, titanium source and alumina source) are preferably powders having similar particle sizes, for example, an average particle size of 0.2 $\mu$m or more or 0.4 $\mu$m or more and 0.6 $\mu$m or less or 0.5 $\mu$m or less and preferably 0.4 $\mu$m or more and 0.6 $\mu$m or less or 0.4 $\mu$m or more and 0.5 $\mu$m or less.

The average particle size of the raw material powder may be similar to the average particle sizes of the starting materials and is preferably 0.4 $\mu$m or more and 0.6 $\mu$m or less or 0.4 $\mu$m or more and 0.5 $\mu$m or less. Furthermore, in order to obtain a primary sintered body in which tetragonal domains are smoothly generated in pressure sintering under the conditions described below, the ratio of the standard deviation [$\mu$m] of the particle size to the average particle size [$\mu$m] of the raw material powder (hereinafter this ratio may also be referred to as the "particle size standard deviation") is preferably 0.5 or less or 0.3 or less. Since an actual powder has a particle size distribution, the particle size standard deviation of the raw material powder is, for example, more than 0 or 0.01 or more, and is preferably more than 0 and 0.5 or less, more than 0 and 0.3 or less or 0.01 or more and 0.3 or less.

The raw material powder may be mixed by at least one of a dry method and a wet method to mix the starting materials to homogeneity; however, wet mixing is preferable. Specifically, for example, at least one of agitation-mixing, a ball mill, and a bead mill may be employed for mixing.

A preferable example of the method for mixing the starting materials is a mixing method involving mixing a mixed raw material powder containing a zirconia source and an yttrium source with a titanium source. The mixed raw material powder may contain an alumina source. The raw material powder is a precursor of a green body that contains a zirconia source as a main component as well as an yttrium source, a titanium source and an alumina source. It is considered that, by mixing a titanium source with zirconia in a state in which the yttrium source and the alumina source have been incorporated, titanium ready to generate tetragonal domains is easily solidly dissolved in zirconia in the subsequent primary sintering and pressure sintering. In addition, a more preferable example of the mixing method is a mixing method that involves mixing a slurry containing a mixed raw material powder of a zirconia source and an yttrium source with a slurry containing a titanium source. It is considered that, by mixing the slurries with controlled ground particle size, the physical properties of the obtained raw material powder can be more easily controlled, and the tetragonal domains of the sintered body obtained by the subsequently primary sintering and pressure sintering are stably and easily generated.

The forming method may be any know forming method for ceramic green bodies (compacts) and may be a forming method suitable for the shape of the intended green body. The forming method is, for example, at least one selected from the group consisting of uniaxial press-forming, injection molding, slip casting, sheet forming and cold isostatic pressing (hereinafter may also be referred to as "CIP") processes, is preferably at least one selected from the group consisting of uniaxial press-forming, injection molding and CIP processes and is more preferably primary press-forming and CIP processes.

The green body to be subjected to the primary sintering step is preferably a green body obtained by a forming step of forming a raw material powder obtained by a mixing method involving mixing a mixed raw material powder containing a zirconia source and an yttrium source with a titanium source and is more preferably a green body obtained by a forming step of forming a raw material powder obtained by a mixing method involving mixing a slurry of a mixed raw material powder containing a zirconia source and an yttrium source with a slurry containing a titanium source.

In the primary sintering step, the aforementioned green body is subjected to pressureless sintering in an oxidizing atmosphere at 1260°C or higher to obtain a primary sintered body. According to the composition of the green body subjected to the primary sintering step, a sintered body having no open pores is obtained as the primary sintered body as a result of such primary sintering. Note that, in the present embodiment, pressureless sintering refers to a method for sintering a material to be sintered (such as a green body or calcined body) by heating the material without applying external force to the material. According to the composition of the green body subjected to the primary sintering step, a sintered body obtained after the pressure sintering has extremely low or no transparency if primary sintering is performed at a temperature lower than 1260°C. The retention temperature of the primary sintering (hereinafter may also be referred to as the "primary sintering temperature") is preferably 1300°C or higher or 1325°C or higher. For example, the upper limit of the primary sintering temperature is 1500°C or lower or 1400°C or lower. Preferable conditions for the pressureless sintering are as follows.

Sintering atmosphere: oxidizing atmosphere, preferably, air atmosphere
Primary sintering temperature: 1260°C or higher, 1300°C or higher or 1325°C or higher and
1500°C or lower or 1400°C or lower
Heating rate: 50°C/hour or more or 80°C/hour or more and
200°C/hour or less or 120°C/hour or less

The retention time at the retention temperature may be adjusted, as appropriate, according to the size of the green body subjected to the primary sintering step and the performance of the primary sintering furnace and can be 30 minutes or more and 15 hours or less or 1 hour or more and 1.5 hours or less, for example.

The primary sintered body obtained by the primary sintering step is preferably a sintered body in a state where only closed pores are present and the relative density is preferably 90% or more. The relative density in the present embodiment differs depending on the composition, and, for example, the relative density of the primary sintered body is 90% or more and 98% or less. In terms of the measured density within the compositional range of the sintered body of the present embodiment, the density is, for example, 5.35 g/cm$^3$ or more, 5.40 g/cm$^3$ or more, 5.60 g/cm$^3$ or more or 5.80 g/cm$^3$ or more and 6.00 g/cm$^3$ or less, 5.90 g/cm$^3$ or less or 5.85 g/cm$^3$ or less, and is preferably 5.35 g/cm$^3$ or more and 6.00 g/cm$^3$ or less, 5.40 g/cm$^3$ or more and 5.9 g/cm$^3$ or less, 5.60 g/cm$^3$ or more and 5.85 g/cm$^3$ or less or 5.80 g/cm$^3$ or more and 5.85 g/cm$^3$ or less.

The "measured density" in the present embodiment is a value [g/cm$^3$] of the mass [g] relative to the sample volume [cm$^3$]. The mass may be the mass obtained by weighing the sample, and the volume may be the volume determined by Archimedes' method in accordance with JIS R 1634. The Archimedes' method may be conducted by using ion exchange water as a solvent and a boiling method as a pretreatment.

The average crystal grain size of the primary sintered body may be any crystal grain size at which pores are easily eliminated by pressure sintering and is preferably 1.0 $\mu$m or less or 0.8 $\mu$m or less. The average crystal grain size of the primary sintered body is, for example, 0.1 $\mu$m or more or 0.3 $\mu$m or more and is, for example, 0.1 $\mu$m or more and 1.0 $\mu$m or less or 0.3 $\mu$m or more and 0.8 $\mu$m or less.

The production method of the present embodiment includes a pressure sintering step of pressure-sintering the primary sintered body in a reducing atmosphere to obtain a pressure-processed body. Pressure sintering eliminates the closed pores contained in the primary sintered body through mass transfer. As a result, the primary sintered body is densified to an extent that the sintered body after the heat treatment exhibits high transparency. When the primary sintered body is sintered in a reducing atmosphere without pressurizing, there is a possibility that a sintered body having light transmitting properties is obtained; however, such a sintered body has no or extremely low transparency.

Pressure sintering is performed in a reducing atmosphere. By pressure sintering in the reducing atmosphere, titanium contained in the primary sintered body becomes reduced, trivalent titanium (Ti$^{3+}$) is generated and thus oxygen vacancies are formed. When oxygen vacancies are formed, the mass transfer is accelerated, the closed pores are efficiently removed as a result, and a dense sintered body is obtained. Furthermore, by subsequently performing a heat treatment step, a sintered body having high transparency is obtained. A sintered body having light transmitting properties can be obtained by subjecting the primary sintered body to pressureless sintering; however, a sintered body having both high light transmitting properties and high transparency is not obtained.

To induce mass transfer suitable for efficiently eliminating closed pores, the reducing atmosphere is preferably a weakly reducing atmosphere and more preferably an inert atmosphere where a reducing member coexists. The inert gas atmosphere may be an argon atmosphere or a nitrogen atmosphere and is preferably an argon atmosphere. The reducing member may be any member composed of a reducing substance and is preferably a carbon-made member.

In pressure sintering, the primary sintered body is placed in a container and pressure-sintered. At least one of members constituting the pressure sintering furnace (hereinafter these members may also be referred to as "furnace members") and the container in which the primary sintered body is placed (hereinafter this container may also be referred to as the "sintering container") may be a reducing member; for example, at least one of furnace members and a sintering container is a carbon-made member, and furnace members and the sintering container are preferably carbon-made members.

An example of the preferable weakly reducing atmosphere is an argon atmosphere or a nitrogen atmosphere in which at least one selected from the group consisting of a heating body, a heat insulating material and a sintering container is a carbon-made member, and an example of the more preferable weakly reducing atmosphere is an argon atmosphere in which a heating body and a sintering container are carbon-made members.

Pressure sintering is, for example, at least one of a hot press process and a hot isostatic pressing process (HIP process) and is preferably an HIP process.

The retention temperature in the pressure sintering (hereinafter may also be referred to as the "pressure sintering temperature") may be any temperature that induces elimination of closed pores by mass transfer and is preferably 1500°C or higher, 1525°C or higher or 1550°C or higher. At a pressure sintering temperature lower than 1500°C, the mechanical strength may increase in some cases but a sintered body exhibits extremely low transparency. The transparency tends to increase with the increase in the pressure sintering temperature. To be able to use common HIP processing apparatuses, the retention temperature is, for example, 1700°C or lower, 1650°C or lower or 1645°C or lower.

In order to obtain a sintered body having a higher fracture toughness value, the pressure sintering temperature is preferably 1600°C or lower, more preferably lower than 1600°C and yet more preferably 1575°C or lower. As long as the pressure sintering temperature is within the aforementioned range, a sintered body that has both a linear transmittance and a fracture toughness value is obtained. Meanwhile, a sintered body with a higher fracture toughness value as well as achieving both a linear transmittance and a fracture toughness value is easily obtained when the pressure sintering temperature is appropriately high within the aforementioned range; thus, the pressure sintering temperature is preferably 1500°C or higher and 1645°C or lower, more preferably 1500°C or higher and 1600°C or lower and yet more preferably 1525°C or higher and 1575°C or lower.

The pressure in the pressurizing process may be any pressure at which elimination of closed pores by the pressurizing process can proceed and is, for example, 50 MPa or more or 100 MPa or more and 200 MPa or less or 170 MPa or less, and preferably 50 MPa or more and 200 MPa or less or 100 MPa or more and 170 MPa or less.

The process time at the pressure sintering temperature may be adjusted, as appropriate, according to the size of the primary sintered body and the performance of the pressure sintering furnace and is, for example, 10 minutes or more and 10 hours or less or 30 minutes or more and 5 hours or less.

In pressure sintering, the heating rate up to the pressure sintering temperature may be 5°C/minute or more or 10°C/minute or more. The upper limit of the heating rate is not provided; however, to be able to use a common pressure sintering furnace, the heating rate is, for example, 100°C/minute or less or 50°C/minute or less.

To induce generation of tetragonal domains in the cubic crystal grains, the cooling rate from the pressure sintering temperature to 1000°C is preferably 50°C/minute or more or 70°C/minute or more. The upper limit of the cooling rate is not provided and may be appropriately set according to the pressure sintering furnace to be used; for example, the upper limit is 300°C/minute or less or 150°C/minute or less. In the present embodiment, the cooling rate from the pressure sintering temperature to 1000°C is, for example, 50°C/minute or more and 300°C/minute or less, 70°C/minute or more and 150°C/minute or less or 70°C/minute or more and 100°C/minute or less.

The production method of the present embodiment includes a heat treatment step of heat-treating a processed body in an oxidizing atmosphere. As a result, trivalent titanium ($Ti^{3+}$) contained in the processed body turns into tetravalent titanium ($Ti^{4+}$), thereby eliminating oxygen defects, and thus a sintered body of the present embodiment having transparency is obtained.

The oxidizing atmosphere is, for example, an oxygen atmosphere or an air atmosphere and is preferably an air atmosphere.

The retention temperature in the heat treatment (hereinafter may also be referred to as the "heat treatment temperature") may be any temperature at which oxidation of titanium efficiently progresses and is, for example, 800°C or higher or 850°C or higher or lower than 1200°C or 1100°C or lower and is preferably 800°C or higher and lower than 1200°C or 850°C or higher and 1100°C or lower.

The retention time at the heat treatment temperature may be adjusted, as appropriate, according to the size of the processed body and the performance of the heat treatment furnace and can be 30 minutes or more and 10 hours or less or 45 minutes or more and 3 hours or less, for example.

EXAMPLES

Hereinafter, the present disclosure is described in detail through examples. However, these examples do not limit the present disclosure.

(Compositional analysis)

The composition of the compositional substance was analyzed by ICP analysis.

(XRD measurement)

An XRD pattern of a sintered body was obtained by XRD measurement under the following conditions using an X-ray diffractometer (for example, Ultima IV produced by RIGAKU Corporation).
Radiation source: CuKα radiation (λ = 0.15418 nm)
Measurement mode: continuous scan
Scan speed: 1°/minute
Measurement range: 20 = 20° to 80°
Accelerating voltage · current: 40 mA · 40 kV
Divergence height slit: 10 mm
Divergence/incident slit: 1°
Receiving slit: open
Detector: semiconductor detector (D/teX Ultra)
Filter: Ni filter
Goniometer radius: 185 mm
Prior to the measurement, a sintered body surface was polished to surface roughness ≤ 0.02 μm to prepare a measurement sample, and the XRD measurement was carried out on this surface.

Smoothing and background subtraction processes were performed by using an analytic program (product name: Integrated Analytical Software for Powder X-ray Diffraction, PDXL Ver. 2.2 produced by RIGAKU Corporation), and then the XRD pattern (processed XRD pattern) was analyzed by profile-fitting with a split pseudo-Voigt function. The conditions of the smoothing process, the background subtraction process and analysis were as follows.
Scherrer constant: 1.000
Smoothing method: smoothing by β-spline, γ threshold = 1.50
Background subtraction method: straight line connecting end points
Kα2 radiation removal method: intensity ratio = 0.497
Peak search method: peak top method, α cut value = 3.00
Profile fitting method: split pseudo-Voigt function
Prior to the measurement, a surface of the sintered body was polished with a #400 grit sandpaper in accordance with JIS R 6001-2 and then lap-polished by using a 3 μm grit diamond abrasive.

The Rietveld analysis was performed on the obtained XRD pattern with an analytic program (Rietan-FP) by using, as the cubic model and the mixed model, structure models in which cubic Fm-3m space group was the cubic phase and tetragonal P42nmc space group was the tetragonal phase.

(Crystallite size)

The crystallite size in the present embodiment was determined from the following equation.

$$D = \kappa\lambda/\beta\cos\theta$$

In the equation above, D is the crystallite size (nm), κ is a Scherrer constant (κ = 1.000), λ is the wavelength of measurement X-ray (when the CuKα radiation is the radiation source, λ = 0.1548 nm), β is the half-width (°) of the peak having a peak top at 20 = 74.0 ± 0.3° and θ is a Bragg angle.
The half-width of the peak having a peak top at 2θ = 74.0 ± 0.3° was determined by analysis under the same conditions as the aforementioned XRD measurement.

(Measured density)

The measured density was determined from the mass [g] relative to the sample volume [cm$^3$]. The mass was obtained by weighing the sample, and the volume was obtained by the Archimedes' method in accordance with JIS R 1634. The Archimedes' method was conducted by using ion exchange water as a solvent and a boiling method as a pretreatment.

(TEM nanodiffraction)

Using a field-emission transmission electron microscope (instrument name: JEM-F200, manufactured by JEOL Ltd.) and an electron beam diffractometer (instrument name: 4D-STEM, manufactured by Gatan), TEM nanodiffraction mapping was performed, a diffraction pattern of a crystal grain observed by the TEM nanodiffraction mapping in the tetragonal [100] direction was obtained, and the spot indicating the tetragonal phase was confirmed.

> Accelerating voltage: 200 Kv
> Magnification of observation: 250000x

(Total transmittance and linear transmittance)

Tt and It were measured with a common UV-VIS spectrophotometer (instrument name: spectrophotometer V-650 produced by JASCO Corporation) under the following conditions. In the obtained spectrum, the total transmittance and the linear transmittance at a wavelength of 600 nm were respectively assumed to be Tt and It. A disk-shaped sintered body having a sample thickness of $1 \pm 0.1$ mm and a surface roughness Ra $\leq 0.02$ $\mu$m on both surfaces was used as the measurement sample.

> Measurement method: UV-VIS spectrophotometry
> Measurement system: double beam system
> Light source: D2/WI
> Measurement wavelength range: 200 nm to 900 nm
> Data capture intervals: 0.5 nm

(Three-point flexural strength)

The three-point flexural strength was measured by a method in accordance with JIS R 1601. A cylindrical sample 4 mm in width, 3 mm in thickness and 45 mm in length was used as the measurement sample, and measurement was carried out by applying a load in a horizontal direction of the measurement sample at a support span of 30 mm. For measurement, a strength tester (instrument name: tabletop universal precision tester AGX-10kNX produced by Shimadzu Corporation) was used.

(Fracture toughness value)

The fracture toughness value ($K_{IC}$) [MPa$\cdot$m$^{0.5}$] was measured by a method that conforms with the SEPB method prescribed in JIS R 1607. The measurement was performed on a cylindrical sintered body sample having a width of 4 mm and a thickness of 3 mm at a support span of 30 mm, and the average value of 10 measurement runs was assumed to be the fracture toughness value of the sintered body of the present embodiment. In addition, a strength tester (for example, INSTRON tester model 5582 produced by INSTRON) was used in the measurement.

(Average crystal grain size)

The average crystal grain size was determined from an SEM observation image observed with a scanning electron microscope (instrument name: JSM-IT500LA produced by JEOL Ltd.) under the following conditions.
> Accelerating voltage: 15 kV
> Irradiation current: 40 nA
> Magnification of observation: 400x to 10000x

Prior to the measurement, a sintered body sample was surface-ground with a #200 grinding stone, then lap-polished with diamond abrasives having grain sizes of 3 $\mu$m and 1 $\mu$m and then thermally etched in an air atmosphere for 1 hour. The thermal etching temperature was set to a temperature 100°C lower than the sintering temperature.
Three SEM observation images were used, and two circles were drawn on each of the SEM observation images in such a way that, for each circle, the total of the number of crystal grains inside the circle ($n_c$) and the number of crystal grains touching the circumference ($N_i$) was $100 \pm 30$ grains. For all of the circles drawn, the crystal grain size of each circle was determined by a planimetric method, and the average value thereof was assumed to be the average crystal grain size.

Example 1

A powder of alumina-containing yttrium-stabilized zirconia with an yttrium content of 5.5 mol% and an aluminum content of 0.05 mass% was mixed with pure water. After mixing, the mixture was wet-ground in a ball mill until the average particle size was 0.5 $\mu$m and the standard deviation of the particle size was 0.1 $\mu$m, as a result of which a zirconia slurry having a powder content (solid component concentration) of 45 mass% was obtained. The particle size standard deviation of the obtained powder was 0.2.

Meanwhile, a powder of titania and pure water was were mixed, and the resulting mixture was wet-ground in a ball mill until the average particle size was 0.5 $\mu$m and the standard deviation of the particle size was 0.1 $\mu$m, as a result of which a titania slurry having a powder content (solid component concentration) of 20 mass% was obtained. The particle size standard deviation of the obtained powder was 0.2.

The obtained zirconia slurry and titania slurry were mixed so that the mass ratio of the zirconia powder to the titania powder was 92:8 to thereby obtain a mixed slurry containing a powder of yttrium-stabilized zirconia containing alumina and titania with an yttrium content of 4.67 mol%, an aluminum content of 0.046 mass% and a titania content of 8 mass% (12.29 mol%).

The obtained mixed slurry was spray-dried at 180°C to obtain a granular powder of yttrium-stabilized zirconia containing alumina and titania with an yttrium content of 4.67 mol%, an aluminum content of 0.046 mass% and a titania content of 8 mass%.

Into a die having an inner diameter of 25 mm, 3 g of the obtained granular powder was loaded and then uniaxially press-formed at a pressure of 98 MPa. After forming, a CIP process was performed at a pressure of 196 MPa to obtain a disk-shaped green body having a diameter of 25 mm.

The obtained green body was subjected to primary sintering under the following conditions to obtain a primary sintered body composed of alumina-containing zirconia containing solidly dissolved titanium and yttrium with an yttrium content of 4.67 mol%, a titanium content of 12.29 mol% and an alumina content of 0.046 mass%. The primary sintered body had an average crystal grain size of 0.6 $\mu$m and a measured density of 5.82 g/cm$^3$.

Primary sintering atmosphere: air atmosphere
Heating rate 100°C/hour
Retention temperature: 1350°C
Retention time: 2 hours

The obtained primary sintered body was placed in a lidded carbon container, the carbon container was placed in an HIP apparatus equipped with a carbon-made heating body, and then an HIP process was performed under the following conditions in a weakly reducing atmosphere to obtain an HIP-processed body.

Pressure medium: argon gas (purity: 99.9%)
Heating rate 10°C/minute
Retention temperature: 1550°C
Retention pressure: 150 MPa
Retention time: 1 hour
After retention, the cooling rate to 1000°C was 80°C/minute.

The obtained HIP-processed body was heat-treated in air atmosphere at 900°C for 1 hour to obtain a sintered body of this example composed of alumina-containing zirconia containing solidly dissolved titanium and yttrium with an yttrium content of 4.67 mol%, a titanium content of 12.29 mol% and an alumina content of 0.046 mass%.

Fig. 1 shows the results of the TEM diffraction mapping results of the sintered body of this example. In Fig. 1, spots of the tetragonal (100) plane and the tetragonal crystal planes equivalent thereto were confirmed (the marked portion in Fig. 1), and it could be confirmed that all spots were the tetragonal spots of 5 nm or less. In addition, from the results of the Rietveld analysis on the XRD pattern of the sintered body of this example shown in Fig. 3, it could be confirmed that the sintered body of this example was 100% cubic phase. This could confirm that the sintered body of the present embodiment is constituted by cubic crystal grains having tetragonal domains. The sintered body of this example had an average crystal grain size of 18 $\mu$m and a crystallite size of 448 nm.

Example 2

A sintered body of this example composed of alumina-containing zirconia containing solidly dissolved titania and yttrium with an yttrium content of 4.67 mol%, a titanium content of 12.29 mol% and an alumina content of 0.046 mass% was obtained as in Example 1 except that the primary sintering temperature was 1300°C. The measured density of the obtained primary sintered body was 5.40 g/cm$^3$, and the sintered body of this example had a crystallite size of 934 nm.

Example 3

A sintered body of this example composed of alumina-containing zirconia containing solidly dissolved titania and yttrium with an yttrium content of 4.67 mol%, a titanium content of 12.29 mol% and an alumina content of 0.046 mass% was obtained as in Example 1 except that the retention temperature during the HIP process was 1500°C. The measured density of the obtained primary sintered body was 5.82 g/cm$^3$, and the sintered body of this example had a crystallite size of 804 nm.

Example 4

A sintered body of this example composed of alumina-containing zirconia containing solidly dissolved titania and yttrium with an yttrium content of 4.67 mol%, a titanium content of 12.29 mol% and an alumina content of 0.046 mass% was obtained as in Example 1 except that the retention temperature during the HIP process was 1600°C. The measured density of the obtained primary sintered body was 5.82 g/cm$^3$, and the sintered body of this example had an average crystal grain size of 36.0 μm and a crystallite size of 678 nm.

Comparative example 1

A sintered body of this comparative example composed of alumina-containing zirconia containing solidly dissolved titanium and yttrium with an yttrium content of 4.67 mol%, a titanium content of 12.29 mol% and an alumina content of 0.046 mass% was obtained as in Example 1 except that the primary sintered body was subjected to pressureless sintering in an air atmosphere at a heating rate of 600°C/hour, a retention temperature of 1550°C and a retention time of 1 hour instead of the HIP process.
The sintered body of this comparative example was constituted by cubic crystal grains and tetragonal crystal grains, had low light transmitting properties and no transparency.

Comparative example 2

A sintered body of this comparative example composed of alumina-containing zirconia containing solidly dissolved titanium and yttrium with an yttrium content of 4.67 mol%, a titanium content of 12.29 mol% and an alumina content of 0.046 mass% was obtained as in Example 1 except that the primary sintering temperature was 1250°C. The sintered body of this comparative example had light transmitting properties but low Tt and no transparency.

Comparative example 3

A sintered body of this comparative example was obtained as in Example 1 except that the primary sintered body was subjected to pressureless sintering (reductive pressureless sintering) at a retention temperature of 1550°C for a retention time of 1 hour in a 95% argon-5% hydrogen mixed gas atmosphere as the reducing atmosphere and that the HIP process was omitted. The sintered body of this comparative example had low light transmitting properties and no transparency although the sintered body was obtained by sintering in a reducing atmosphere.

Comparative example 4

A sintered body of this comparative example composed of alumina-containing zirconia containing solidly dissolved titanium and yttrium with an yttrium content of 4.67 mol%, a titanium content of 12.29 mol% and an alumina content of 0.046 mass% was obtained as in Example 1 except that process temperature in the HIP process was 1450°C. The sintered body of this comparative example had low light transmitting properties and no transparency.

Comparative example 5

A sintered body of yttrium-titania-stabilized zirconia having an yttrium content of 9.0 mol% and a titanium content of 10 mol% was obtained by the same method as in Example 3 of JP-A-2011-102227. That is, a commercially available zirconia powder (product name: TZ-10Y produced by TOSOH CORPORATION) and a commercially available titania powder (product name: PT-401M produced by ISHIHARA SANGYO KAISHA, LTD.) were weighed so that the yttrium content was 9.0 mol% and the titania content was 10 mol%, the resulting mixture was mixed in a ball mill for 72 hours using zirconia balls having a diameter of 10 mm as a grinding medium and dried to prepare a powder, and this powder was used as the raw material powder.
After the raw material powder was formed by die pressing at a pressure of 50 MPa, the formed material was further compacted with a cold isostatic press machine at a pressure of 200 MPa to obtain a cylindrical green body having a diameter of 20 mm.
This green body was subjected to primary sintering in an air atmosphere at 1325°C for 2 hours to obtain a primary sintered body having a composition of $TiO_2:Y_2O_3:ZrO_2 = 0.1:0.09:0.81$ (molar ratio). The obtained primary sintered body had a relative density of 90% or more and an average grain size of 2 $\mu$m or less, and the crystal phase was a mixed phase of cubic and tetragonal phases.

The obtained primary sintered body was placed in a lidded carbon container, the carbon container was placed in an HIP apparatus equipped with a carbon-made heating body, and then an HIP process was performed under the following conditions in a weakly reducing atmosphere to obtain an HIP-processed body.

Pressure medium: argon gas (purity: 99.9%)

Retention temperature: 1500°C

Retention pressure: 150 MPa

Retention time: 1 hour

After retention, the cooling rate to 1000°C was 80°C/minute.

The obtained HIP-processed body was heat-treated in air atmosphere at 1000°C for 2 hours to obtain a sintered body of this comparative example composed of zirconia containing solidly dissolved titanium and yttrium with an yttrium content of 9 mol% and a titanium content of 10 mol%. The sintered body of this comparative example was a sintered body of cubic zirconia composed of cubic crystal grains and had a crystallite size of 1409 nm.

The results of examples and comparative examples are indicated in the table below. The compositions in the table below are on an oxide basis.

[Table 1]

| | $Y_2O_3$ [mol%] | $TiO_2$ [mol%] | $Al_2O_3$ [wt%] | Tt [%] | It [%] | It/Tt | Three-point flexural strength (MPa) | Fracture toughness value [MPa·m$^{0.5}$] |
|---|---|---|---|---|---|---|---|---|
| Example 1 | 4.67 | 12.29 | 0.046 | 72.6 | 62.6 | 0.86 | 439 | 2.3 |
| Example 2 | 4.67 | 12.29 | 0.046 | 71.3 | 56.0 | 0.79 | 452 | 2.2 |
| Example 3 | 4.67 | 12.29 | 0.046 | 71.3 | 53.9 | 0.76 | 523 | 2.6 |
| Example 4 | 4.67 | 12.29 | 0.046 | 73.2 | 65.7 | 0.90 | 290 | 2.2 |
| Comparative example 1 | 4.67 | 12.29 | 0.046 | 39.0 | 0.2 | 0.00 | - | 2.2 |
| Comparative example 2 | 4.67 | 12.29 | 0.046 | 2.4 | 0 | 0.01 | - | 2.0 |
| Comparative example 3 | 4.67 | 12.29 | 0.046 | 36.5 | 0.1 | 0.00 | 290 | 2.2 |
| Comparative example 4 | 4.67 | 12.29 | 0.046 | 40.7 | 0.1 | 0.01 | 824 | 2.6 |
| Comparative example 5 | 9 | 10 | 0 | 72.8 | 69.7 | 0.96 | 285 | 1.4 |

The sintered bodies of Examples all had It of 50% and high transparency, and also had a strength of 280 MPa or more. Furthermore, the sintered bodies of Examples had a fracture toughness value of 1.5 MPa·m$^{0.5}$ or more or even 2.2 MPa·m$^{0.5}$ or more, and it could be formed that the sintered bodies had both high transparency and high resistance to propagation of fracture. In addition, all of the sintered bodies of Examples had a peak having a peak top at $2\theta = 74.0 \pm 0.3°$ but did not have a peak having a peak top at $2\theta = 72.8 \pm 0.3°$ or a peak having a peak top at $2\theta = 74.8 \pm 0.3°$. Meanwhile, the sintered bodies of Comparative examples 3 and 4 had light transmitting properties but not transparency, and the fracture toughness value of the sintered body of Comparative example 5 was 1.4 MPa·m$^{0.5}$; thus it could be confirmed that despite high It and high three-point flexural strength, the resistance to propagation of fracture was about a half of that of Examples.

Example 5

A sintered body of this example composed of alumina-containing zirconia containing solidly dissolved titanium and yttrium with an yttrium content of 4.75 mol%, a titanium content of 10.82 mol% and an alumina content of 0.047 mass% was obtained as in Example 1 except that a zirconia slurry and a titania slurry were mixed so that the mass ratio of the zirconia powder to the titania powder was 93:7 so as to obtain a mixed slurry containing a powder of yttrium-stabilized zirconia containing alumina and titania with an yttrium content of 4.75 mol%, an aluminum content of 0.047 mass% and a titania content of 7 mass% (10.82 mol%). The measured density of the obtained primary sintered body was 5.84 g/cm$^3$, and the sintered body of this example had an average crystal grain size of 18 $\mu$m and a crystallite size of 693 nm.

Example 6

A sintered body of this example composed of alumina-containing zirconia containing solidly dissolved titanium and yttrium with an yttrium content of 4.83 mol%, a titanium content of 9.33 mol% and an alumina content of 0.047 mass% was obtained as in Example 1 except that a zirconia slurry and a titania slurry were mixed so that the mass ratio of the zirconia powder to the titania powder was 94:6 so as to obtain a mixed slurry containing a powder of yttrium-stabilized zirconia containing alumina and titania with an yttrium content of 4.83 mol%, an aluminum content of 0.047 mass% and a titania content of 6 mass% (9.33 mol%). The measured density of the obtained primary sintered body was 5.85 g/cm$^3$, and the sintered body of this example had an average crystal grain size of 15 $\mu$m and a crystallite size of 584 nm.

Example 7

A powder of alumina-containing yttrium-stabilized zirconia with an yttrium content of 5.0 mol% and an aluminum content of 0.05 mass% was mixed with pure water. After mixing, the mixture was wet-ground in a ball mill until the average particle size was 0.5 $\mu$m and the standard deviation of the particle size was 0.1 $\mu$m, as a result of which a zirconia slurry having a powder content (solid component concentration) of 45 mass% was obtained. A sintered body of this example composed of alumina-containing zirconia containing solidly dissolved titanium and yttrium with an yttrium content of 4.35 mol%, a titanium content of 12.26 mol% and an alumina content of 0.046 mass% was obtained as in Example 1 except that the obtained zirconia slurry was used. The measured density of the obtained primary sintered body was 5.84 g/cm$^3$, and the sintered body of this example had a crystallite size of 312 nm.

Example 8

A powder of alumina-containing yttrium-stabilized zirconia with an yttrium content of 6.5 mol% and an aluminum content of 0.05 mass% was mixed with pure water. After mixing, the mixture was wet-ground in a ball mill until the average particle size was 0.5 $\mu$m and the standard deviation of the particle size was 0.1 $\mu$m, as a result of which a zirconia slurry having a powder content (solid component concentration) of 45 mass% was obtained. A sintered body of this example composed of alumina-containing zirconia containing solidly dissolved titanium and yttrium with an yttrium content of 5.65 mol%, a titanium content of 12.39 mol% and an alumina content of 0.046 mass% was obtained as in Example 1 except that the obtained zirconia slurry was used. The measured density of the obtained primary sintered body was 5.84 g/cm$^3$, and the sintered body of this example had a crystallite size of 1039 nm.

Example 9

A sintered body of this example composed of alumina-containing zirconia containing solidly dissolved titanium and yttrium with an yttrium content of 4.52 mol%, a titanium content of 15.18 mol% and an alumina content of 0.045 mass% was obtained as in Example 1 except that the zirconia slurry and the titania slurry were mixed so that the mass ratio of the zirconia powder to the titania powder was 90:10. The measured density of the obtained primary sintered body was 5.81 g/cm$^3$, and the sintered body of this example had a crystallite size of 940 nm.

Example 10

A powder of yttrium-stabilized zirconia with an yttrium content of 5.5 mol% was mixed with pure water. After mixing, the mixture was wet-ground in a ball mill until the average particle size was 0.5 $\mu$m and the standard deviation of the particle size was 0.1 $\mu$m, as a result of which a zirconia slurry having a powder content (solid component concentration) of 45 mass% was obtained. A sintered body of this example composed of zirconia containing solidly dissolved titanium and yttrium with an yttrium content of 4.67 mol% and a titanium content of 12.29 mol% was obtained as in Example 1 except that the obtained zirconia slurry was used. The measured density of the obtained primary sintered body was 5.84 g/cm$^3$, and the sintered body of this example had a crystallite size of 781 nm.

Comparative example 6

A powder of alumina-containing yttrium-stabilized zirconia with an yttrium content of 4.0 mol% and an aluminum content of 0.05 mass% was mixed with pure water, and the resulting mixture was wet-ground in a ball mill until the average particle size was 0.5 μm and the standard deviation of the particle size was 1.0 μm to obtain a zirconia slurry having a solid component content of 45 mass%.

A sintered body of this comparative example composed of alumina-containing zirconia containing solidly dissolved titanium and yttrium with an yttrium content of 3.40 mol%, a titanium content of 0.23 mol% and an alumina content of 0.046 mass% was obtained as in Example 1 except that the obtained zirconia slurry and a titania slurry were mixed so that the mass ratio of the zirconia powder to the titania powder was 92:8 so as to obtain a mixed slurry containing a powder of yttrium-stabilized zirconia containing alumina and titania with an yttrium content of 3.40 mol%, an aluminum content of 0.046 mass% and a titania content of 8 mass% (0.23 mol%). The sintered body of this comparative example had a crystallite size of 223 nm.

Comparative example 7

Primary sintering, the HIP process and the heat treatment were performed as in Example 1 except that a mixed slurry containing a powder of yttrium-stabilized zirconia containing alumina and titania at an yttrium content of 4.33 mol%, an aluminum content of 0.044 mass% and a titania content of 12.5 mass% (18.71 mol%) was obtained by mixing a zirconia slurry and a titania slurry so that the mass ratio of the zirconia powder to the titania powder was 87.5:12.5.

However, in this comparative example, cracking occurred during the heat treatment after the HIP process, and no sintered body could be obtained.

The results are indicated in the table below. The compositions in the table below are on an oxide basis. Here, in Comparative example 7, a sintered body could not be obtained due to cracking during the heat treatment and thus evaluation of Tt etc., could not be performed.

[Table 2]

| | $Y_2O_3$ [mol%] | $TiO_2$ [mol%] | $Al_2O_3$ [wt%] | Tt [%] | It [%] | It/Tt | Three-point flexural strength [MPa] | Fracture toughness value [MPa·m$^{0.5}$] |
|---|---|---|---|---|---|---|---|---|
| Example 1 | 4.67 | 12.29 | 0.046 | 72.6 | 62.6 | 0.86 | 439 | 2.3 |
| Example 5 | 4.75 | 10.82 | 0.047 | 71.9 | 56.7 | 0.79 | 381 | 2.5 |
| Example 6 | 4.83 | 9.33 | 0.047 | 72.4 | 55.7 | 0.77 | 680 | 2.6 |
| Example 7 | 4.35 | 12.26 | 0.046 | 69.2 | 49.4 | 0.71 | 897 | 2.7 |
| Example 8 | 5.65 | 12.39 | 0.046 | 70.2 | 63.4 | 0.90 | 326 | 1.7 |
| Example 9 | 4.52 | 15.18 | 0.045 | 71.7 | 65.6 | 0.91 | 359 | 2.3 |
| Example 10 | 4.67 | 12.29 | 0 | 71.7 | 69.9 | 0.95 | 359 | 2.3 |
| Comparative example 6 | 3.40 | 9.23 | 0.046 | 35.8 | 0.10 | 0.00 | 535 | - |
| Comparative example 7 | 4.33 | 18.71 | 0.044 | | | | | |

It could be confirmed that It decreased with the decrease in the titanium content but Tt did not have a particular tendency. In addition, it could be confirmed that the fracture toughness value tended to improve with the decrease in the titanium content. Furthermore, Examples 1 and 10 could confirm that the presence of alumina increased the flexural strength but did not affect the fracture toughness value.

Meanwhile, it could be confirmed through the comparative examples that a sintered body could not be obtained at a titanium content exceeding 18.5 mol%.

Example 11

A granular powder of yttrium-stabilized zirconia containing alumina and titania with an yttrium content of 4.67 mol%, an aluminum content of 0.046 mass% and a titania content of 8 mass% was obtained as in Example 1.

An alumina powder, an iron oxide powder, a cobalt oxide powder, a 4 mol% yttria-containing zirconia powder and a titania powder were wet-mixed in an ethanol solvent in a ball mill using zirconia balls to obtain a mixed powder containing 2 mass% of alumina, 0.4 mass% of iron oxide, 0.3 mass% of cobalt oxide and the balance being zirconia containing 4 mol% of yttria and 4.5 wt% of titania. This mixed powder was dried in air at 110°C and sifted to prepare a black raw material powder.

The granular powder of yttrium-stabilized zirconia was loaded into a disk-shaped primary die having a diameter of 25 mm and a protruding-recessing shape and was uniaxially press-formed at a pressure of 25 MPa to obtain a disk-shaped primary green body composed of a granular powder of yttrium-stabilized zirconia 2 mm in thickness and 25 mm in diameter. The primary green body was placed on a disk-shaped secondary die having a diameter of 50 mm such that the protruding shape of the primary green body faced upward. The black raw material powder was loaded to cover the entire upper surface of the primary green body. Subsequently, uniaxial pressure-forming was performed at a pressure of 50 MPa to obtain a secondary green body in which the primary green body and the green body composed of the black raw material powder were stacked on top of each other. The obtained secondary green body was subjected to the CIP process at a pressure of 200 MPa. As a result, a disk-shaped secondary green body 3.5 mm in thickness and 50 mm in diameter was obtained.

The obtained secondary green body was subjected to primary sintering, the HIP process and the heat treatment as in Example 1 to obtain a complex sintered body of this embodiment in a state where a sintered body of transparent zirconia and a sintered body of black zirconia (opaque zirconia) had been monolithically sintered. Here, It of the black zirconia sintered body was 0.5% or less.

Example 12

A complex sintered body of this embodiment in a state where a sintered body of transparent zirconia and a sintered body of black zirconia (opaque zirconia) had been monolithically sintered was obtained as in Example 11 except that a granular powder of yttrium-stabilized zirconia containing alumina and titania with an yttrium content of 4.75 mol%, an aluminum content of 0.047 mass% and a titania content of 7 mass% (10.82 mol%) obtained as in Example 5 was used.

The biaxial flexural strength of the obtained complex sintered body was measured in accordance with the biaxial flexural strength measurement prescribed in ISO/DIS 6872. The results are indicated in the table below.

[Table 3]

|  | Biaxial flexural strength [MPa] |
|---|---|
| Example 11 | 534 |
| Example 12 | 595 |

The complex sintered body of this example exhibited a biaxial flexural strength exceeding 500 MPa. As a result, it could be confirmed that the sintered body of the present embodiment can be used as a member having high mechanical strength.

The entire contents of the description, the claims, the drawings and the abstract of Japanese Patent Application No. 2023-141827 filed August 31st, 2023 are hereby incorporated by reference as the disclosure of the description of the present disclosure.

**Claims**

1. A sintered body of zirconia containing solidly dissolved titanium and yttrium, the sintered body having an yttrium content of 3.5 mol% or more and less than 6.0 mol% and a titanium content of 6.0 mol% or more and 18.5 mol% or less and comprising cubic crystal grains containing tetragonal domains.

2. The sintered body according to claim 1, wherein the sintered body contains alumina.

3. The sintered body according to claim 1 or 2, wherein a crystallite size determined from a half-width of a peak having a peak top at 2θ = 74.0 ± 0.3° in an XRD pattern thereof is 1400 nm or less.

4. The sintered body according to any one of claims 1 to 3, wherein an average crystal grain size is 5 μm or more and 50 μm or less.

5. The sintered body according to any one of claims 1 to 4, wherein a linear transmittance at a sample thickness of $1 \pm 0.1$ mm and a measurement wavelength of 600 nm is 45% or more.

6. The sintered body according to any one of claims 1 to 5, wherein a fracture toughness value ($K_{IC}$) is 1.5 MPa·m$^{0.5}$ or more.

7. The sintered body according to any one of claims 1 to 6, wherein a three-point flexural strength is 280 MPa or more.

8. A production method for the sintered body according to any one of claims 1 to 7, the method comprising: a primary sintering step of subjecting a green body containing a zirconia source, an yttrium source and a titanium source at an yttrium content of 3.5 mol% or more and less than 6.0 mol% and a titanium content of 6.0 mol% or more and 18.5 mol% or less to pressureless sintering in an oxidizing atmosphere at 1260°C or higher to obtain a primary sintered body; a pressure sintering step of pressure-sintering the primary sintered body in a reducing atmosphere at 1500°C or higher to obtain a pressure-processed body and a heat treatment step of heat-treating the pressure-processed body in an oxidizing atmosphere.

9. The production method according to claim 8, wherein the green body is obtained by a forming step of forming a raw material powder obtained by a mixing method involving mixing a mixed raw material powder containing a zirconia source and an yttrium source with a titanium source.

10. The production method according to claim 8 or 9, wherein the primary sintered body has a measured density of 5.35 g/cm$^3$ or more and 6.00 g/cm$^3$ or less.

11. The production method according to any one of claims 8 to 10, wherein pressure sintering involves a hot isostatic pressing process.

12. The production method according to any one of claims 8 to 11, wherein the reducing atmosphere is a weakly reducing atmosphere.

13. The production method according to any one of claims 8 to 12, wherein a cooling rate from a retention temperature to 1000°C in pressure sintering is 50°C/minute or more and 300°C/minute or less.

14. A member comprising the sintered body according to any one of claims 1 to 7.

FIG. 1

FIG. 2

FIG. 3

# EP 4 772 491 A1

## INTERNATIONAL SEARCH REPORT

International application No.

**PCT/JP2024/030217**

### A. CLASSIFICATION OF SUBJECT MATTER

*C04B 35/488*(2006.01)i; *C01G 25/02*(2006.01)i; *C04B 35/645*(2006.01)i
FI: C04B35/488 500; C04B35/645 500; C01G25/02

According to International Patent Classification (IPC) or to both national classification and IPC

### B. FIELDS SEARCHED

Minimum documentation searched (classification system followed by classification symbols)

C04B35/488; C01G25/02; C04B35/645

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2021-121576 A (TOSOH CORPORATION) 26 August 2021 (2021-08-26) paragraphs [0009], [0025], [0029], [0064], [0127]-[0129], [0134], [0143], tables 4-5, example 22 | 1-3, 6-12, 14 |
| Y | paragraphs [0009], [0025], [0029], [0064], [0127]-[0129], [0134], [0143], tables 4-5, example 22 | 13 |
| A | entire text, all drawings | 4-5 |
| Y | JP 2018-002527 A (TOSOH CORPORATION) 11 January 2018 (2018-01-11) paragraph [0061] | 13 |
| A | entire text, all drawings | 1-12, 14 |
| A | JP 02-199059 A (TOSOH CORPORATION) 07 August 1990 (1990-08-07) entire text, all drawings | 1-14 |
| A | JP 62-091467 A (TOSOH CORPORATION) 25 April 1987 (1987-04-25) entire text, all drawings | 1-14 |

☑ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/030217** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2011-102227 A (TOSOH CORPORATION) 26 May 2011 (2011-05-26) entire text, all drawings | 1-14 |
| P, A | WO 2023/234397 A1 (KURARAY NORITAKE DENTAL INC.) 07 December 2023 (2023-12-07) entire text, all drawings | 1-14 |

Form PCT/ISA/210 (second sheet) (July 2022)

**INTERNATIONAL SEARCH REPORT**
**Information on patent family members**

International application No.

**PCT/JP2024/030217**

| Patent document cited in search report | | | Publication date (day/month/year) | Patent family member(s) | Publication date (day/month/year) |
|---|---|---|---|---|---|
| JP | 2021-121576 | A | 26 August 2021 | US 2022/0162127 A1 paragraphs [0010], [0042], [0047], [0095], [0171]-[0178], [0183], [0191], tables 4-5, example 22<br>CN 113631531 A<br>KR 10-2021-0142629 A | |
| JP | 2018-002527 | A | 11 January 2018 | (Family: none) | |
| JP | 02-199059 | A | 07 August 1990 | (Family: none) | |
| JP | 62-091467 | A | 25 April 1987 | US 4758541 A entire text, all drawings<br>EP 206780 A2 | |
| JP | 2011-102227 | A | 26 May 2011 | US 2012/0058883 A1 entire text, all drawings<br>CN 102803180 A<br>KR 10-2012-0030401 A | |
| WO | 2023/234397 | A1 | 07 December 2023 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62091467 A
- JP 2011011970 A
- JP 2011102227 A
- JP 2023141827 A

**Non-patent literature cited in the description**

- TZ-10Y. TOSOH CORPORATION
- PT-401M. ISHIHARA SANGYO KAISHA, LTD